# EUROPEAN PATENT SPECIFICATION

(11) **EP 3 705 702 B1**
(45) Date of publication and mention of the grant of the patent: **30.10.2024**
(21) Application number: 20161037.5
(22) Date of filing: 04.03.2020
(51) Int. Cl.: F02C 7/262

(54) **AIRCRAFT ENGINE REIGNITION**
FLUGZEUGMOTORWIEDERZÜNDUNG
RÉALLUMAGE DE MOTEUR D'AÉRONEF

(30) Priority: 04.03.2019 US 201962813331 P; 09.04.2019 US 201916379425
(43) Date of publication of application: 09.09.2020
(73) Proprietor: Pratt & Whitney Canada Corp., Longueuil, Québec J4G 1A1 (CA)
(72) Inventor: MANOUKIAN, Patrick, Longueuil, Québec J4G 1A1 (CA)
(74) Representative: Dehns

(56) References cited:
- GB-A- 1 233 241
- US-A- 5 551 227
- US-A1- 2018 128 182

## Description

### TECHNICAL FIELD

The application relates generally to engine operation, and more particularly to techniques for reigniting engines.

### BACKGROUND OF THE ART

An engine flameout refers to unintended shutdown of an engine due to the extinction of flames in the combustion chamber. In some cases, inclement weather conditions may be responsible for an engine flameout, for example due to ingested ice or water during a rain storm and/or a hail storm. Other causes of engine flameout are also known to exist.

When an engine flameout event occurs during aircraft flight, or in other sensitive circumstances, proper and timely reignition of the engine can be crucial. Traditional approaches require a pilot or other operator to manually command reignition of the engine. In the case of engine flameout during aircraft flight, the pilot may need to concurrently stabilize the aircraft, making manually commanding reignition of the engine a complex operation. In other cases, the pilot may be absent from the cockpit for a period of time (e.g. the aircraft is on autopilot), and thus the engine may be left non-operational for an extended duration.

As such, there is room for improvement.

US 2018/128 182 discloses a system and method for starting gas turbine engines.

### SUMMARY

In accordance with a first aspect of the present invention, there is provided a method for reigniting an engine of an aircraft in accordance with claim 1.

In an embodiment according to the previous embodiment, the method further comprises performing a fuel purge prior to initiating the predetermined ignition sequence while the commanded engine operating state corresponds to the engine on state and when the engine speed is below the predetermined threshold.

In an embodiment according to any one or more of the previous embodiments, performing the fuel purge comprises dry motoring the engine for a predetermined period of time.

In an embodiment according to any one or more of the previous embodiments, the method further comprises, following the predetermined ignition sequence, determining whether the engine was successfully ignited.

In an embodiment according to any one or more of the previous embodiments, the method further comprises, responsive to determining that the engine was not successfully ignited, repeating the predetermined ignition sequence while the commanded engine operating state corresponds to the engine on state and when the engine speed is below the predetermined threshold.

In an embodiment according to any one or more of the previous embodiments, the method further comprises producing an alert indicating that the engine was not successfully ignited.

In an embodiment according to any one or more of the previous embodiments, the method further comprises: detecting a change in the commanded engine operating state from the engine on state to an engine off state; and delaying initiation of the predetermined ignition sequence until a subsequent change in the commanded engine operating state to the engine on state is detected.

In an embodiment according to any one or more of the previous embodiments, the predetermined threshold is a second predetermined threshold, and the method further comprises: comparing the engine speed to a first predetermined threshold greater than the second predetermined threshold; and while the commanded engine operating state corresponds to the engine on state, and when the engine speed is above the first predetermined threshold, performing a predetermined reignition sequence for the engine.

In accordance with a second aspect of the present invention, there is provided a system for reigniting an engine of an aircraft in accordance with claim 9.

In an embodiment according to the previous embodiment, the program instructions are further executable for performing a fuel purge prior to initiating the predetermined ignition sequence while the commanded engine operating state corresponds to the engine on state and when the engine speed is below the predetermined threshold.

In an embodiment according to any one or more of the previous embodiments, performing the fuel purge comprises dry motoring the engine for a predetermined period of time.

In an embodiment according to any one or more of the previous embodiments, the program instructions are further executable for, following the predetermined ignition sequence, determining whether the engine was successfully ignited.

In an embodiment according to any one or more of the previous embodiments, the program instructions are further executable for, responsive to determining that the engine was not successfully ignited, repeating the predetermined ignition sequence while the commanded engine operating state corresponds to the engine on state and when the engine speed is below the predetermined threshold.

In an embodiment according to any one or more of the previous embodiments, the program instructions are further executable for producing an alert indicating that the engine was not successfully ignited.

In an embodiment according to any one or more of the previous embodiments, the program instructions are further executable for: detecting a change in the commanded engine operating state from the engine on state to an engine off state; and delaying initiation of the predetermined ignition sequence until a subsequent change in the commanded engine operating state to the engine on state is detected.

In an embodiment according to any one or more of the previous embodiments, the predetermined threshold is a second predetermined threshold, wherein the program instructions are further executable for: comparing the engine speed to a first predetermined threshold greater than the second predetermined threshold; and while the commanded engine operating state corresponds to the engine on state, and when the engine speed is above the first predetermined threshold, performing a predetermined reignition sequence for the engine.

Features of the systems, devices, and methods described herein may be used in various combinations, in accordance with the embodiments described herein. In particular, any of the above features may be used alone, together in any suitable combination, and/or in a variety of arrangements, as appropriate.

### DESCRIPTION OF THE DRAWINGS

Reference is now made to the accompanying figures in which:
Figure 1 is a schematic cross-sectional view of an example engine, in accordance with one or more illustrative embodiments;
Figure 2 is a block diagram of an example system for reigniting an engine of an aircraft, in accordance with one or more illustrative embodiments;
Figure 3 is a flowchart of an example method for reigniting an engine of an aircraft, in accordance with one or more illustrative embodiments; and
Figure 4 is block diagram of an example computing device for implementing the method of Figure 3, in accordance with one or more illustrative embodiments.

### DETAILED DESCRIPTION

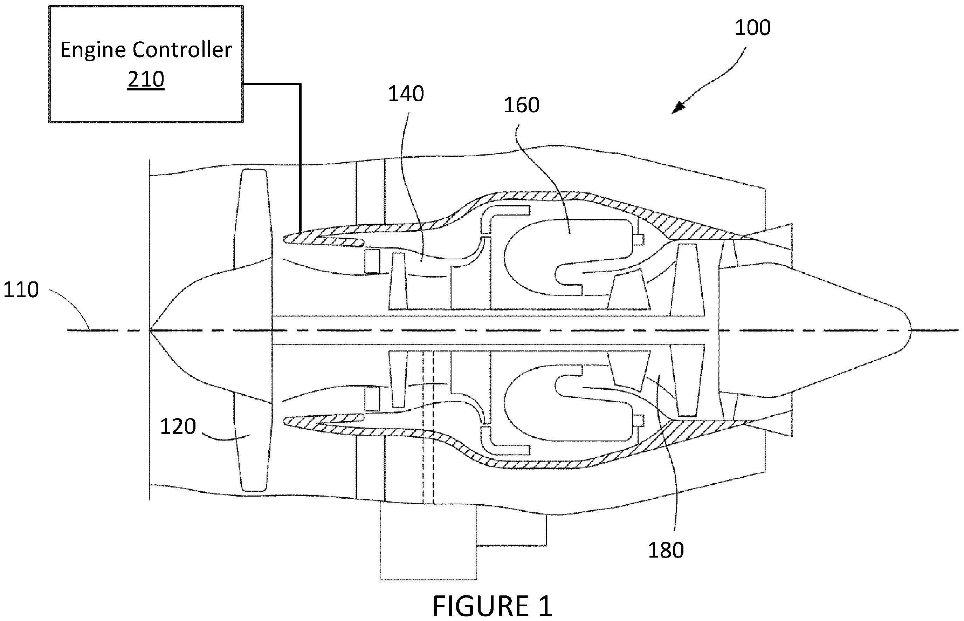

With reference to Figure 1, there is illustrated a gas turbine engine 100. Note that while engine 100 is a turbofan engine, the methods and systems described herein may be applicable to turboprop, turboshaft, and other types of gas turbine engines, or combustion engines generally. In addition, the engine 100 may be an auxiliary power unit (APU), an auxiliary power supply (APS), a hybrid engine, or any other suitable type of engine. In addition, although the foregoing discussion relates to a singular engine 100, it should be understood that the techniques described herein can be applied substantially concurrently to multiple engines.

The engine 100 generally comprises in serial flow communication: a fan 120 through which ambient air is propelled, a compressor section 140 for pressurizing the air, a combustor 160 in which the compressed air is mixed with fuel and ignited for generating an annular stream of hot combustion gases, and a turbine section 180 for extracting energy from the combustion gases. Axis 110 defines an axial direction of the engine 100. In some embodiments, a low pressure spool is composed of a low pressure shaft and a low pressure turbine. The low pressure shaft drives the propeller 120. A high pressure spool is composed of a high pressure turbine attached to a high pressure shaft, which is connected to the compressor section 140. It should be noted that other configurations for the engine 100 are also considered.

Control of the operation of the engine 100 can be effected by one or more control systems, for example an engine controller 210. The engine controller 210 can modulate a fuel flow rate provided to the engine 100, the position and/or orientation of variable geometry mechanisms within the engine 100, a bleed level of the engine 100, and the like.

In the course of normal operation, it can occur that the engine 100 experiences a flameout event: that is to say, that an unintended shutdown of the engine 100 can occur due to the extinction of flames in the combustor 160. The flameout event can occur despite various countermeasures taken to prevent or reduce the risk of the flameout event occurring. In response to the flameout event occurring, it may be desirable for a controller of the engine 100 to initiate a procedure for reignition of the engine 100 without operator input, for instance to reduce the number of tasks required of the operator of the engine 100. As used herein, the terms "reignite", "reigniting", or "reignition" refer to procedures for starting an engine from a low speed and/or substantially stopped condition, and to procedures for renewing the flames in the combustor 160 of the engine 100 while the engine 100 is still at a high speed condition; that is to say, when one or more elements of the engine 100 are rotating at a high speed.

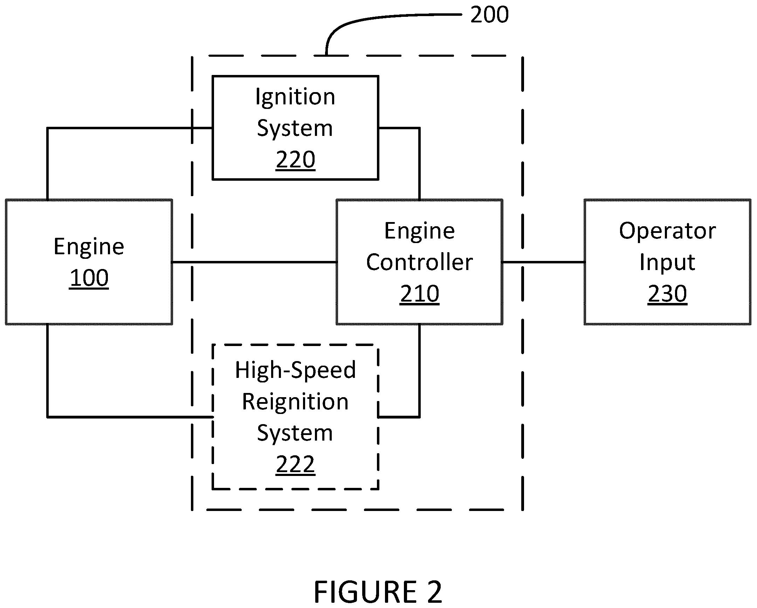

With reference to Figure 2, there is shown a system 200 for reigniting an engine of an aircraft, for example the engine 100. The system 200 is composed of the engine controller 210, an ignition system 220, and optionally a high-speed reignition system 222. The system 200 is communicatively coupled to the engine 100 for obtaining information about the operating conditions of the engine 100, for instance from one or more sensors incorporated within the engine 100, or coupled thereto. Additionally, the ignition system 220 and the high-speed reignition system 222 are coupled to the engine 100 for respectively causing ignition and high speed reignition of the engine 100. For example, the ignition system 220 is used to ignite the engine 100 when the engine is off or at a low speed condition. In instances in which the engine 100 is part of an aircraft, the ignition system 220 is used by the engine controller 210 to cause ignition of the engine 100, for instance when the aircraft is on the ground, or at low speed during flight. The high-speed reignition system 222 can be used by the engine controller 210 to reignite the engine when the engine is flamed out and remains at a high speed condition, for instance during flight, when the aircraft is already airborne and travelling at some speed.

The system 200 is also communicatively coupled to operator input 230, which can include buttons, switches, dials, or other discrete-type input mechanisms, touchscreens or other electronic input devices, and the like. For example, the engine controller 210 can be communicatively coupled to the operator input 230 for obtaining various commands from an operator of the engine 100. For example, the operator input 230 includes an activation switch for the engine 100 which sets a commanded operating state for the engine 100. The commanded operating state can be an "off" state, an "on" state, a "start" state, and the like, each associated with respective positions for the activation switch. The "off" position is used to command the engine 100 to shut down when in operation, and to remain shut down. The "on" position is used to command the engine 100 to remain in operation. The "start" position, which can be a momentary switch position, is used to command the engine to begin operation when in a shutdown state; that is to say, to cause the engine 100 to transition from the "off" state to the "on" state. It should be noted that other embodiments are considered: the operator input 230 can include other types of devices for commanding the engine 100 to operate in one or more states. Additionally, other states for the engine 100 are also considered: for instance, a separate "shut down" state can be used to cause the engine 100 to transition from the "on" state to the "off" state, and the like.

The engine controller 210 can be any suitable type of engine controller, including a full-authority digital engine controller (FADEC) or similar device. In some embodiments, the engine controller 210 is used in the context of an aircraft. The engine controller is configured for controlling operation of more than one engine 100 substantially concurrently. The engine controller 210 is also configured for logging various information about aircraft usage and operating conditions, including engine speed, engine operating state, and the like, and to log the occurrence of certain events, for example engine flameout events. To this end, the engine controller 210 can be provided with, or be coupled to, a variety of sensors to allow the engine controller 210 to monitor operating conditions of the engine.

In operation, the engine controller 210 can monitor the operating state of the engine 100 and compare with the commanded operating state for the engine 100, as provided via the operator input 230. In the event of an engine flameout event, the engine controller 210 is configured for initiating a procedure to attempt to reignite the engine 100, if the commanded operating state remains unchanged. Put differently, following an engine flameout event, the engine controller 210 verifies whether an operator has requested a change in the operating state of the engine 100, via the operator input 230. If the commanded operating state is still the "on" state, the engine controller 210 attempts to reignite the engine 100; that is to say, the engine controller 210 attempts reignition without any specific input from the operator of the engine 100.

The detection of a flameout event within the engine 100 can be done in any suitable fashion. In some embodiments, the engine controller 210 can determine the occurrence of a flameout event due to a drop in speed or power of the engine 100, which was not commanded by an operator via the operator input 230. In other embodiments, the engine controller 210 can determine the occurrence of a flameout event due to a change in temperature within the engine 100, or within a particular portion thereof. Other approaches for detecting the flameout event are considered.

Following detection of a flameout event, the engine controller 210 is configured for attempting to reignite the engine 100 using the ignition system 220 or, optionally, the high-speed reignition system 222, depending on the operating conditions of the engine 100. In some embodiments, the engine controller 210 determines, based on a speed of the engine 100, whether reignition of the engine should be performed by the ignition system 220 or by the high-speed reignition system 222. The speed of the engine can be determined in any suitable fashion, using any suitable sensors and/or algorithms. For example, when the speed of the engine 100 is above a first threshold, the engine controller 210 commands the high-speed reignition system 222 to attempt to reignite the engine 100. When the speed of the engine 100 is below a second threshold, the engine controller 210 instead commands the ignition system 220 to reignite the engine 100. The ignition system 220 can perform a predetermined ignition sequence for the engine 100, which may also be used when cold starting the engine 100 on the ground, or the like. When the speed of the engine is between the first and second thresholds, the engine controller 210 can be configured to not attempt reignition, unless manually commanded by an operator.

The particular speed thresholds used by the engine controller 210 when deciding whether to reignite the engine 100 can vary based on implementation, engine type, engine operating conditions, safety standards, and the like. For example, the first threshold can be set at 85% of a maximum speed for the engine 100, at 50% of a maximum speed for the engine 100, or at any other suitable fraction of the maximum speed for the engine 100. The second threshold can be set at 25% of the maximum speed for the engine 100, 15% of the maximum speed for the engine 100, or any other suitable fraction of the maximum speed for the engine 100. In instances where the engine 100 operates in the context of an aircraft, the maximum speed for the engine 100 can be a cruising speed, a maximum takeoff speed, or any other suitable speed. Other thresholds can be set based on other values, depending on the operating context of the engine 100.

In addition, it should be understood that other factors may be used by the engine controller 210 when determining whether to use the high-speed reignition system 222 or the ignition system 220. For instance, the altitude of the aircraft, the air pressure in the vicinity of the engine 100, the operating temperature of the engine, and the like, can factor into the decision of the engine controller 210. Other factors can also be considered.

In some embodiments, the engine controller 210 substantially continuously monitors the commanded operating state for the engine 100 following the occurrence of the flameout event. If, at any point, the commanded operating state is changed, the engine controller 210 cancels the reigniting procedures initiated by the engine controller 210, and waits for the operator of the engine 100 to manually request reignition of the engine 100, for example by setting the commanded operating state to "start". Alternatively, if the commanded operating state is changed, the engine controller 210 can delay the reigniting procedure initiated by the engine controller 210 until the commanded operating state is changed once again. For example, if the commanded operating state is returned to the "on" position, the engine controller 210 can resume the reignition procedure. In some other embodiments, the engine controller 210 substantially continuously monitors the speed of the engine 100: if the speed of the engine 100 is suitable for attempting a reignition procedure, the engine controller 210 then determines whether the commanded operating state is the "on" state, and if so, attempts reignition, as appropriate. Other embodiments are also considered.

In some embodiments, prior to attempting reignition of the engine 100, the engine controller 210 can command a fuel purge of the engine 100. The fuel purge can be performed in any suitable way, for instance by dry motoring the engine 100. For example, once the engine controller 210 has determined that the speed of the engine 100 is below the second threshold, and that the commanded operating state for the engine 100 is set to "on" (for instance as set by the operator input 230), the engine controller 210 can command dry motoring of the engine 100 for a predetermined period of time. Other steps can also be taken prior to reigniting the engine 100.

In some embodiments, the engine controller 210 is configured for determining whether the reignition attempt was successfully executed. Techniques similar to those used for detecting the flameout event can be used to determine whether the engine 100 was successfully reignited. When the engine 100 was not successfully reignited, the engine controller 210 can produce an alert, for example for an operator of the engine 100. The alert can be a visual alert, an audible alert, or the like. In addition, the engine controller 210 can attempt to reignite the engine 100 substantially continuously, if a previous attempt has failed. Once the engine 100 is successfully reignited, the engine controller 210 can return to normal operation, and can optionally inform the operator that the engine 100 is once again operational.

In one example, the engine controller 210 detects an engine flameout event, then determines the commanded engine operating state and the engine speed. The operator input 230 still indicates a commanded operating state of "on", and the engine speed is above the first threshold. The engine controller 210 then attempts to reignite the engine 100 via the high-speed reignition system 222. When the engine controller 210 detects that the high-speed reignition system 222 failed to reignite the engine 100, the engine controller once again determines the commanded engine operating state and the engine speed. At this second time, the engine controller 210 determines that the engine speed is now below the second threshold, and that commanded engine operating state is unchanged. The engine controller 210 then commands the ignition system 220 to attempt reignition of the engine 100. After determining that the engine 100 was successfully reignited, the engine controller 210 can return to normal operation.

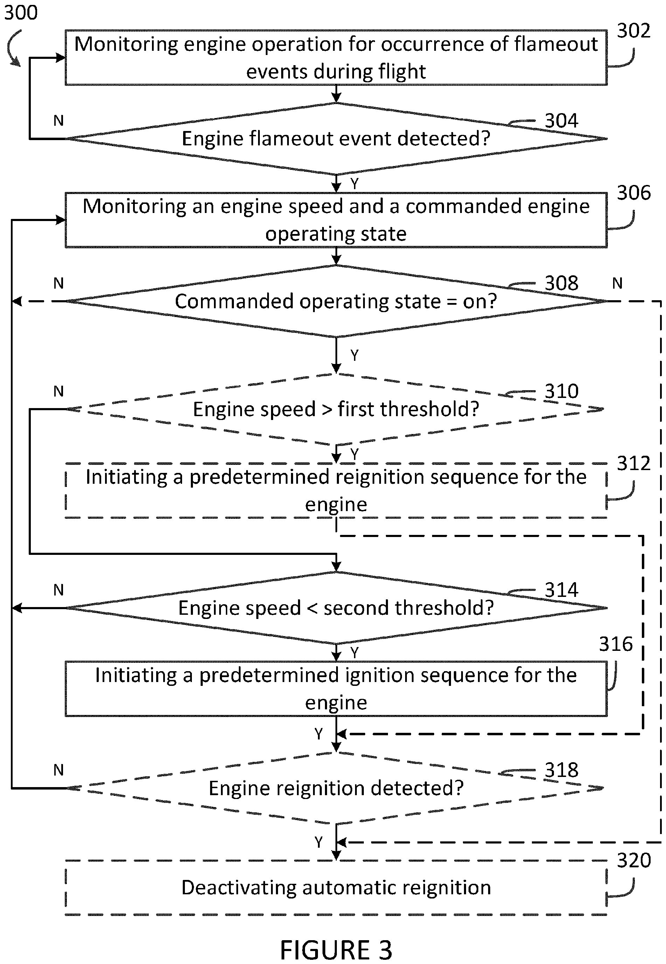

With reference to Figure 3, there is shown a method 300 for reigniting an engine of an aircraft, for example the engine 100. As will be described, certain optional steps of the method 300 can also serve for reigniting the engine 100. It should also be noted that although the foregoing discussion is focused on embodiments in which the engine 100 is used in the context of an aircraft, other implementations are also considered. In some embodiments, the method 300 forms part of one or more procedures initiated by a controller of the engine 100, for instance the engine controller 210, for reigniting the engine 100 without any specific operator input.

At step 302, the operation of the engine 100 is monitored, for example by the engine controller 210, to detect the occurrence of flameout events, such as flameout events during flight. At decision step 304, when a flameout event is detected by the engine controller 210, the method 300 moves to step 306. As long as no flameout event is detected, the method returns to step 302.

At step 306, the speed of the engine 100 and the commanded operating state for the engine 100 are monitored, for example by the engine controller 210. The engine controller 210 is configured for interfacing with any suitable type and number of sensors, systems, and the like, for adequately monitoring the speed and commanded operating state of the engine 100.

At decision step 308, a determination is made regarding whether the commanded operating state for the engine 100 is set to the on state. For example, the engine controller 210 detects the commanded operating state from an operator input, for instance the operator input 230. Optionally, if the commanded operating state is set to off, or any other state different from the on state, the method 300 proceeds to step 320, where the reignition procedure initiated by the engine controller 210 is halted. Optionally still, the method 300 can return to step 306, and continue to monitor the speed and commanded operating state. When the commanded operating state is set to the on state, the method 300 proceeds optionally to decision step 310, or to decision step 314.

At optional decision step 310, a determination is made regarding whether the engine speed is above a first threshold. The first threshold can be a fraction of a maximum operating speed of the engine 100, for example 85% of the maximum speed, 50% of the maximum speed, or any other suitable value. When the engine speed is above the first threshold, the method 300 moves to optional step 312. When the engine speed is not above the first threshold, the method 300 moves to decision step 314. The comparison between the engine speed and the first threshold can be performed in any suitable way, using any suitable calculations or algorithms.

At step 312, a predetermined reigniting sequence for the engine 100 is initiated, for example by the engine controller 210. The reigniting sequence can be implemented by any suitable device or system, including the high speed reignition system 222. In this fashion, an attempt at reigniting the engine is performed when the commanded operating state is the on state, and when the engine speed is above the first predetermined threshold. Optionally, after step 312, the method 300 can move to decision step 318.

At decision step 314, a determination is made regarding whether the engine speed is below a second threshold, which is distinct from the first threshold. The second threshold can be a fraction of a maximum operating speed of the engine 100, for example 25% of the maximum speed, 15% of the maximum speed, or any other suitable value. When the engine speed is below the second threshold, the method 300 moves to step 316. When the engine speed is not below the second threshold, the method 300 can return to some previous step, for instance step 306, and continue to monitor the speed and commanded operating state of the engine 100. The comparison between the engine speed and the second threshold can be performed in any suitable way, using any suitable calculations or algorithms.

At step 316, a predetermined ignition sequence for the engine 100 is initiated, for example by the engine controller 210. The ignition sequence can be implemented by any suitable device or system, including the ignition system 220. In this fashion, an attempt at reigniting the engine is performed when the commanded operating state is the on state, and when the engine speed is below the second predetermined threshold. In some embodiments, the ignition sequence implemented by the ignition system 220 is the same ignition sequence as would be used to start the engine 100 from a shutdown state, for instance a cold start ignition sequence. In other embodiments, the ignition sequence may be a different ignition sequence. Optionally, after step 316, the method 300 can move to decision step 318.

At decision step 318, optionally a determination is made regarding whether an engine reignition is detected. For example, the engine controller 210 is configured for monitoring the operating conditions of the engine 100 to detect a reignition of the engine 100, following steps 312 or 316, respectively. If the engine 100 was successfully reignited, the method 300 can optionally move to step 320. If the engine 100 was not successfully reignited, the method 300 can return to some previous step, for instance step 306, to reattempt reigniting the engine 100. Optionally still, if the engine 100 was not successfully reignited, an alert can be produced for the operator of the engine 100, for instance by the engine controller 210.

At step 320, following successful reignition of the engine 100, or following a determination that the commanded operating state has changed, or is no longer set to the "on" state, the reignition procedure initiated by the engine controller 210 can be deactivated. In some embodiments, once the controller-initiated procedure is deactivated, the engine controller 210 requires a manual input from an operator to reignite the engine.

In some embodiments, a fuel purge of the engine 100 is performed as part of either or both of the predetermined reigniting sequence at high speed and the predetermined ignition sequence. Other variations are also considered, as appropriate.

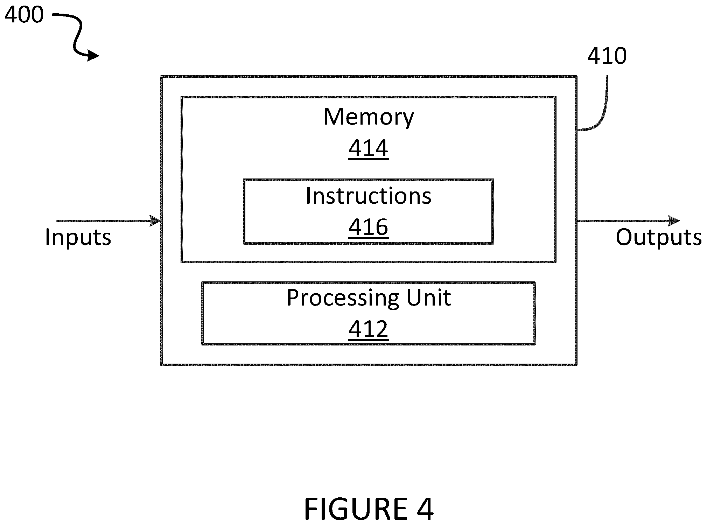

With reference to Figure 4, the method of Figure 3 may be implemented by a computing device 410 as an embodiment of the engine controller 210. The computing device 410 comprises a processing unit 412 and a memory 414 which has stored therein computer-executable instructions 416. The processing unit 412 may comprise any suitable devices configured to implement the functionality of the engine controller 210 such that instructions 416, when executed by the computing device 410 or other programmable apparatus, may cause the functions/acts/steps performed by the engine controller 210 as part of the method 300 and as described herein to be executed. The processing unit 412 may comprise, for example, any type of general-purpose microprocessor or microcontroller, a digital signal processing (DSP) processor, a central processing unit (CPU), an integrated circuit, a field programmable gate array (FPGA), a reconfigurable processor, other suitably programmed or programmable logic circuits, custom-designed analog and/or digital circuits, or any combination thereof.

The memory 414 may comprise any suitable known or other machine-readable storage medium. The memory 414 may comprise non-transitory computer readable storage medium, for example, but not limited to, an electronic, magnetic, optical, electromagnetic, infrared, or semiconductor system, apparatus, or device, or any suitable combination of the foregoing. The memory 414 may include a suitable combination of any type of computer memory that is located either internally or externally to device, for example random-access memory (RAM), read-only memory (ROM), compact disc read-only memory (CDROM), electro-optical memory, magnetooptical memory, erasable programmable read-only memory (EPROM), and electrically-erasable programmable read-only memory (EEPROM), Ferroelectric RAM (FRAM) or the like. Memory 414 may comprise any storage means (e.g., devices) suitable for retrievably storing machine-readable instructions 416 executable by processing unit 412.

It should be noted that the computing device 410 may be implemented as part of a FADEC or other similar device, including electronic engine control (EEC), engine control unit (EUC), engine electronic control system (EECS), and the like. In addition, it should be noted that the techniques described herein can be performed by the engine controller 210 substantially in real-time.

The above description is meant to be exemplary only, and one skilled in the art will recognize that changes may be made to the embodiments described without departing from the scope of the present disclosure. Still other modifications which fall within the scope of the present disclosure will be apparent to those skilled in the art, in light of a review of this disclosure. Although particular embodiments have been shown and described, it will be apparent to those skilled in the art that changes and modifications may be made without departing from this invention in its broader aspects, as defined in the following claims. The scope of the following claims should not be limited by the embodiments set forth in the examples, but should be given the broadest reasonable interpretation consistent with the description as a whole.

## Claims

1. A method (300) for reigniting an engine (100) of an aircraft, comprising:
obtaining a commanded engine operating state from an operator input (230) settable to an engine off state, to an engine start state, and to an engine on state, wherein:
the engine off state commands the engine (100) to shut down when in operation and to remain shut down;
the engine start state commands the engine (100) to begin operation when shut down; and
the engine on state commands the engine (100) to remain in operation after beginning the operation;
detecting an engine flameout event during aircraft flight;
responsive to detecting the engine flameout event, monitoring an engine speed and the commanded engine operating state;
comparing the engine speed to a predetermined threshold;
determining whether the commanded engine operating state corresponds to the engine on state following the detection of the engine flameout event; and
while the commanded engine operating state corresponds to the engine on state, and when the engine speed is below the predetermined threshold, initiating a predetermined ignition sequence for the engine (100).

2. The method of claim 1, further comprising performing a fuel purge prior to initiating the predetermined ignition sequence while the commanded engine operating state corresponds to the engine on state and when the engine speed is below the predetermined threshold.

3. The method of claim 2, wherein performing the fuel purge comprises dry motoring the engine (100) for a predetermined period of time.

4. The method of claim 1, 2 or 3, further comprising, following the predetermined ignition sequence, determining whether the engine (100) was successfully ignited.

5. The method of claim 4, further comprising, responsive to determining that the engine (100) was not successfully ignited, repeating the predetermined ignition sequence while the commanded engine operating state corresponds to the engine on state and when the engine speed is below the predetermined threshold.

6. The method of claim 5, further comprising producing an alert indicating that the engine (100) was not successfully ignited.

7. The method of any preceding claim, further comprising:
detecting a change in the commanded engine operating state from the engine on state to an engine off state; and
delaying initiation of the predetermined ignition sequence until a subsequent change in the commanded engine operating state to the engine on state is detected.

8. The method of any preceding claim, wherein the predetermined threshold is a second predetermined threshold, further comprising:
comparing the engine speed to a first predetermined threshold greater than the second predetermined threshold; and
while the commanded engine operating state corresponds to the engine on state, and when the engine speed is above the first predetermined threshold, performing a predetermined reignition sequence for the engine (100).

9. A system (200) for reigniting an engine (100) of an aircraft, comprising:
an operator input (230) settable to an engine off state, to an engine start state, and to an engine on state, wherein:
the engine off state commands the engine (100) to shut down when in operation and to remain shut down;
the engine start state commands the engine (100) to begin operation when shut down; and
the engine on state commands the engine (100) to remain in operation after beginning the operation;
a processing unit (412); and
a non-transitory computer-readable medium (414) coupled to the processing unit (412),
**characterised in that**:
the non-transitory computer-readable medium (414) comprises computer-readable program instructions (416) executable by the processing unit (412) for:
obtaining a commanded engine operating state via the operator input (230);
detecting an engine flameout event during aircraft flight;
responsive to detecting the engine flameout event, monitoring an engine speed and the commanded engine operating state;
comparing the engine speed to a predetermined threshold;
determining whether the commanded engine operating state corresponds to the engine on state following the detection; and
while the commanded engine operating state corresponds to the engine on state, and when the engine speed is below the predetermined threshold, initiating a predetermined ignition sequence for the engine (100).

10. The system of claim 9, wherein the program instructions (416) are further executable for performing a fuel purge prior to initiating the predetermined ignition sequence while the commanded engine operating state corresponds to the engine on state and when the engine speed is below the predetermined threshold, optionally wherein performing the fuel purge comprises dry motoring the engine (100) for a predetermined period of time.

11. The system of claim 9 or 10, wherein the program instructions (416) are further executable for, following the predetermined ignition sequence, determining whether the engine (100) was successfully ignited.

12. The system of claim 11, wherein the program instructions (416) are further executable for, responsive to determining that the engine (100) was not successfully ignited, repeating the predetermined ignition sequence while the commanded engine operating state corresponds to the engine on state and when the engine speed is below the predetermined threshold, optionally wherein the program instructions (416) are further executable for producing an alert indicating that the engine (100) was not successfully ignited.

13. The system of any of claims 9 to 12, wherein the program instructions (416) are further executable for:
detecting a change in the commanded engine operating state from the engine on state to an engine off state; and
delaying initiation of the predetermined ignition sequence until a subsequent change in the commanded engine operating state to the engine on state is detected.

14. The system of any of claims 9 to 13, wherein the predetermined threshold is a second predetermined threshold, wherein the program instructions (416) are further executable for:
comparing the engine speed to a first predetermined threshold greater than the second predetermined threshold; and
while the commanded engine operating state corresponds to the engine on state, and when the engine speed is above the first predetermined threshold, performing a predetermined reignition sequence for the engine (100).

## Patentansprüche

1. Verfahren (300) zum Wiederzünden eines Motors (100) eines Flugzeugs, umfassend:
Erlangen eines befohlenen Motorbetriebszustands aus einer Bedienereingabe (230), der auf einen Motor-Aus-Zustand, einen Motor-Start-Zustand und einen Motor-Ein-Zustand einstellbar ist, wobei:
der Motor-Aus-Zustand dem Motor (100) befiehlt, sich während des Betriebs abzuschalten und abgeschaltet zu bleiben;
der Motor-Start-Zustand dem Motor (100) befiehlt, mit dem Betrieb zu beginnen, wenn er abgeschaltet ist; und
der Motor-Ein-Zustand dem Motor (100) befiehlt, nach dem Beginnen des Betriebs in Betrieb zu bleiben;
Erkennen eines Motorflammabrissereignisses während des Flugs des Flugzeugs;
als Reaktion auf Erkennen des Motorflammabrissereignisses Überwachen einer Motordrehzahl und des befohlenen Motorbetriebszustands;
Vergleichen der Motordrehzahl mit einem vorgegebenen Schwellenwert;
Bestimmen, ob der befohlene Motorbetriebszustand dem Motor-Ein-Zustand im Anschluss an die Erkennung des Motorflammabrissereignisses entspricht; und
während der befohlene Motorbetriebszustand dem Motor-Ein-Zustand entspricht und wenn die Motordrehzahl unter dem vorgegebenen Schwellenwert liegt, Einleiten einer vorgegebenen Zündsequenz für den Motor (100).

2. Verfahren nach Anspruch 1, ferner umfassend Durchführen einer Kraftstoffbeseitigung vor Einleiten der vorgegebenen Zündsequenz, während der befohlene Motorbetriebszustand dem Motor-Ein-Zustand entspricht und wenn die Motordrehzahl unter dem vorgegebenen Schwellenwert liegt.

3. Verfahren nach Anspruch 2, wobei Durchführen der Kraftstoffbeseitigung Trockenlaufenlassen des Motors (100) für eine vorgegebene Zeitspanne umfasst.

4. Verfahren nach Anspruch 1, 2 oder 3, ferner umfassend im Anschluss an die vorgegebene Zündsequenz Bestimmen, ob der Motor (100) erfolgreich gezündet wurde.

5. Verfahren nach Anspruch 4, ferner umfassend als Reaktion auf Bestimmen, dass der Motor (100) nicht erfolgreich gezündet wurde, Wiederholen der vorgegebenen Zündsequenz, während der befohlene Motorbetriebszustand dem Motor-Ein-Zustand entspricht und wenn die Motordrehzahl unter dem vorgegebenen Schwellenwert liegt.

6. Verfahren nach Anspruch 5, ferner umfassend Erzeugen einer Warnung, die angibt, dass der Motor (100) nicht erfolgreich gezündet wurde.

7. Verfahren nach einem der vorstehenden Ansprüche, ferner umfassend:
Erkennen einer Änderung des befohlenen Motorbetriebszustands vom Motor-Ein-Zustand in den Motor-Aus-Zustand; und
Verzögern des Einleitens der vorbestimmten Zündsequenz, bis eine nachfolgende Änderung des befohlenen Motorbetriebszustands in den Motor-Ein-Zustand erkannt wird.

8. Verfahren nach einem der vorhergehenden Ansprüche, wobei der vorgegebene Schwellenwert ein zweiter vorgegebener Schwellenwert ist, ferner umfassend:
Vergleichen der Motordrehzahl mit einem ersten vorgegebenen Schwellenwert, der größer als der zweite vorgegebene Schwellenwert ist; und
während der befohlene Motorbetriebszustand dem Motor-Ein-Zustand entspricht und wenn die Motordrehzahl über dem ersten vorgegebenen Schwellenwert liegt, Durchführen einer vorgegebenen Wiederzündsequenz für den Motor (100).

9. System (200) zum Wiederzünden eines Motors (100) eines Flugzeugs, umfassend:
eine Bedienereingabe (230), die auf einen Motor-Aus-Zustand, auf einen Motor-Start-Zustand und auf einen Motor-Ein-Zustand einstellbar ist, wobei:
der Motor-Aus-Zustand dem Motor (100) befiehlt, sich während des Betriebs abzuschalten und abgeschaltet zu bleiben;
der Motor-Start-Zustand dem Motor (100) befiehlt, mit dem Betrieb zu beginnen, wenn er abgeschaltet ist; und
der Motor-Ein-Zustand dem Motor (100) befiehlt, nach dem Beginnen des Betriebs in Betrieb zu bleiben;
eine Verarbeitungseinheit (412); und
ein nichttransitorisches computerlesbares Medium (414), das mit der Verarbeitungseinheit (412) gekoppelt ist,
**dadurch gekennzeichnet, dass**:
das nichttransitorische computerlesbare Medium (414) computerlesbare Programmanweisungen (416) umfasst, die von der Verarbeitungseinheit (412) zu Folgendem ausführbar sind:
Erlangen eines befohlenen Motorbetriebszustands über die Bedienereingabe (230);
Erkennen eines Motorflammabrissereignisses während des Flugs des Flugzeugs;
als Reaktion auf Erkennen des Motorflammabrissereignisses Überwachen einer Motordrehzahl und des befohlenen Motorbetriebszustands;
Vergleichen der Motordrehzahl mit einem vorgegebenen Schwellenwert;
Bestimmen, ob der befohlene Motorbetriebszustand dem Motor-Ein-Zustand im Anschluss an die Erkennung entspricht; und
während der befohlene Motorbetriebszustand dem Motor-Ein-Zustand entspricht und wenn die Motordrehzahl unter dem vorgegebenen Schwellenwert liegt, Einleiten einer vorgegebenen Zündsequenz für den Motor (100).

10. System nach Anspruch 9, wobei die Programmbefehle (416) ferner dazu ausführbar sind, eine Kraftstoffspülung vor Einleiten der vorgegebenen Zündsequenz durchzuführen, während der befohlene Motorbetriebszustand dem Motor-Ein-Zustand entspricht und wenn die Motordrehzahl unter dem vorgegebenen Schwellenwert liegt, wobei optional Durchführen der Kraftstoffbeseitigung Trockenlaufenlassen des Motors (100) für eine vorgegebene Zeitspanne umfasst.

11. System nach Anspruch 9 oder 10, wobei die Programmanweisungen (416) ferner ausführbar sind, um im Anschluss an die vorgegebene Zündsequenz zu bestimmen, ob der Motor (100) erfolgreich gezündet wurde.

12. System nach Anspruch 11, wobei die Programmanweisungen (416) ferner dazu ausführbar sind, als Reaktion auf Bestimmen, dass der Motor (100) nicht erfolgreich gezündet wurde, die vorgegebene Zündsequenz zu wiederholen, während der befohlene Motorbetriebszustand dem Motor-Ein-Zustand entspricht und wenn die Motordrehzahl unter dem vorgegebenen Schwellenwert liegt, wobei optional die Programmanweisungen (416) ferner dazu ausführbar sind, eine Warnung zu erzeugen, die angibt, dass der Motor (100) nicht erfolgreich gezündet wurde.

13. System nach einem der Ansprüche 9 bis 12, wobei die Programmanweisungen (416) ferner zu Folgendem ausführbar sind:
Erkennen einer Änderung des befohlenen Motorbetriebszustands vom Motor-Ein-Zustand in den Motor-Aus-Zustand; und
Verzögern des Einleitens der vorbestimmten Zündsequenz, bis eine nachfolgende Änderung des befohlenen Motorbetriebszustands in den Motor-Ein-Zustand erkannt wird.

14. System nach einem der Ansprüche 9 bis 13, wobei der vorgegebene Schwellenwert ein zweiter vorgegebener Schwellenwert ist, wobei die Programmanweisungen (416) ferner zu Folgendem ausführbar sind:
Vergleichen der Motordrehzahl mit einem ersten vorgegebenen Schwellenwert, der größer als der zweite vorgegebene Schwellenwert ist; und
während der befohlene Motorbetriebszustand dem Motor-Ein-Zustand entspricht und wenn die Motordrehzahl über dem ersten vorgegebenen Schwellenwert liegt, Durchführen einer vorgegebenen Wiederzündsequenz für den Motor (100).

## Revendications

1. Procédé (300) de rallumage d'un moteur (100) d'un aéronef, comprenant :
l'obtention d'un état de fonctionnement de moteur commandé à partir d'une entrée d'opérateur (230) pouvant être réglée sur un état d'arrêt de moteur, sur un état de démarrage de moteur et sur un état de marche de moteur, dans lequel :
l'état d'arrêt de moteur commande au moteur (100) de s'arrêter lorsqu'il est en fonctionnement et de rester arrêté ;
l'état de démarrage de moteur commande au moteur (100) de commencer à fonctionner lorsqu'il est arrêté ; et
l'état de marche de moteur commande au moteur (100) de rester en fonctionnement après le début du fonctionnement ;
la détection d'un événement d'extinction de moteur pendant un vol d'aéronef ;
en réponse à la détection de l'événement d'extinction de moteur, la surveillance d'un régime moteur et de l'état de fonctionnement de moteur commandé ;
la comparaison du régime moteur à un seuil prédéterminé ;
le fait de déterminer si l'état de fonctionnement de moteur commandé correspond à l'état de marche de moteur suite à la détection de l'événement d'extinction de moteur ; et
pendant que l'état de fonctionnement de moteur commandé correspond à l'état de marche de moteur, et que le régime moteur est inférieur au seuil prédéterminé, le lancement d'une séquence d'allumage prédéterminée pour le moteur (100).

2. Procédé selon la revendication 1, comprenant également la réalisation d'une purge de carburant avant de lancer la séquence d'allumage prédéterminée pendant que l'état de fonctionnement de moteur commandé correspond à l'état de marche de moteur et que le régime moteur est inférieur au seuil prédéterminé.

3. Procédé selon la revendication 2, dans lequel la réalisation de la purge de carburant comprend le fonctionnement à sec du moteur (100) pendant une période prédéterminée.

4. Procédé selon la revendication 1, 2 ou 3, comprenant également, après la séquence d'allumage prédéterminée, le fait de déterminer si le moteur (100) a été allumé avec succès.

5. Procédé selon la revendication 4, comprenant également, en réponse à la détermination du fait que le moteur (100) n'a pas été allumé avec succès, la répétition de la séquence d'allumage prédéterminée pendant que l'état de fonctionnement de moteur commandé correspond à l'état de marche de moteur et que le régime moteur est inférieur au seuil prédéterminé.

6. Procédé selon la revendication 5, comprenant également la production d'une alerte indiquant que le moteur (100) n'a pas été allumé avec succès.

7. Procédé selon une quelconque revendication précédente, comprenant également :
la détection d'un changement de l'état de fonctionnement de moteur commandé, de l'état de marche de moteur à un état d'arrêt de moteur ; et
le retardement du lancement de la séquence d'allumage prédéterminée jusqu'à ce qu'un changement ultérieur de l'état de fonctionnement de moteur commandé vers l'état de marche de moteur soit détecté.

8. Procédé selon une quelconque revendication précédente, dans lequel le seuil prédéterminé est un second seuil prédéterminé, comprenant également :
la comparaison du régime moteur à un premier seuil prédéterminé supérieur au second seuil prédéterminé ; et
pendant que l'état de fonctionnement de moteur commandé correspond à l'état de marche de moteur, et que le régime moteur est supérieur au premier seuil prédéterminé, la réalisation d'une séquence d'allumage prédéterminée pour le moteur (100).

9. Système (200) de rallumage d'un moteur (100) d'un aéronef, comprenant :
une entrée d'opérateur (230) pouvant être réglée sur un état d'arrêt de moteur, sur un état de démarrage de moteur et sur un état de marche de moteur, dans lequel :
l'état d'arrêt de moteur commande au moteur (100) de s'arrêter lorsqu'il est en fonctionnement et de rester arrêté ;
l'état de démarrage de moteur commande au moteur (100) de commencer à fonctionner lorsqu'il est arrêté ; et
l'état de marche de moteur commande au moteur (100) de rester en fonctionnement après le début du fonctionnement ;
une unité de traitement (412) ; et
un support non transitoire lisible par ordinateur (414) couplé à l'unité de traitement (412),
**caractérisé en ce que** :
le support non transitoire lisible par ordinateur (414) comprend des instructions de programme lisibles par ordinateur (416) exécutables par l'unité de traitement (412) pour :
obtenir un état de fonctionnement de moteur commandé par l'intermédiaire de l'entrée d'opérateur (230) ;
détecter un événement d'extinction de moteur pendant un vol d'aéronef ;
en réponse à la détection de l'événement d'extinction de moteur, surveiller un régime moteur et l'état de fonctionnement de moteur commandé ;
comparer le régime moteur à un seuil prédéterminé ;
déterminer si l'état de fonctionnement de moteur commandé correspond à l'état de marche de moteur suite à la détection ; et
pendant que l'état de fonctionnement de moteur commandé correspond à l'état de marche de moteur, et que le régime moteur est inférieur au seuil prédéterminé, lancer une séquence d'allumage prédéterminée pour le moteur (100).

10. Système selon la revendication 9, dans lequel les instructions de programme (416) sont également exécutables pour réaliser une purge de carburant avant de lancer la séquence d'allumage prédéterminée pendant que l'état de fonctionnement de moteur commandé correspond à l'état de marche de moteur et que le régime moteur est inférieur au seuil prédéterminé, éventuellement dans lequel la réalisation de la purge de carburant comprend le fonctionnement à sec du moteur (100) pendant une période prédéterminée.

11. Système selon la revendication 9 ou 10, dans lequel les instructions de programme (416) sont également exécutables pour, après la séquence d'allumage prédéterminée, déterminer si le moteur (100) a été allumé avec succès.

12. Système selon la revendication 11, dans lequel les instructions de programme (416) sont également exécutables pour, en réponse à la détermination du fait que le moteur (100) n'a pas été allumé avec succès, répéter la séquence d'allumage prédéterminée pendant que l'état de fonctionnement de moteur commandé correspond à l'état de marche de moteur et que le régime moteur est inférieur au seuil prédéterminé, éventuellement dans lequel les instructions de programme (416) sont également exécutables pour produire une alerte indiquant que le moteur (100) n'a pas été allumé avec succès.

13. Système selon l'une quelconque des revendications 9 à 12, dans lequel les instructions de programme (416) sont également exécutables pour :
détecter un changement de l'état de fonctionnement de moteur commandé, de l'état de marche de moteur à un état d'arrêt de moteur ; et
retarder le lancement de la séquence d'allumage prédéterminée jusqu'à ce qu'un changement ultérieur de l'état de fonctionnement de moteur commandé vers l'état de marche de moteur soit détecté.

14. Système selon l'une quelconque des revendications 9 à 13, dans lequel le seuil prédéterminé est un second seuil prédéterminé, dans lequel les instructions de programme (416) sont également exécutables pour :
comparer le régime moteur à un premier seuil prédéterminé supérieur au second seuil prédéterminé ; et
pendant que l'état de fonctionnement de moteur commandé correspond à l'état de marche de moteur, et que le régime moteur est supérieur au premier seuil prédéterminé, réaliser une séquence d'allumage prédéterminée pour le moteur (100).
